# EUROPÄISCHE PATENTSCHRIFT

(11) **EP 0 320 708 B1**
(45) Veröffentlichungstag und Bekanntmachung des Hinweises auf die Patenterteilung: **27.10.1993**
(21) Anmeldenummer: 88120102.4
(22) Anmeldetag: 02.12.1988
(51) Int. Cl.: H04N 7/087, H04N 5/782

(54) **Videoaufzeichnungsgerät mit einem Programmwunschspeicher**
Video recording device with a memory for preferred programmes
Appareil d'enregistrement vidéo avec une mémoire de demande de programme

(30) Priorität: 15.12.1987 DE 3742468
(43) Veröffentlichungstag der Anmeldung: 21.06.1989
(73) Patentinhaber: Nokia (Deutschland) GmbH, 75175 Pforzheim (DE)
(72) Erfinder: Apitz, Siegfried, D-7530 Pforzheim (DE)

(56) Entgegenhaltungen:
- EP-A- 0 029 946
- EP-A- 0 257 534
- PATENT ABSTRACTS OF JAPAN, Band 9, Nr. 296 (P-407)[2019], 22. November 1985; & JP-A-60 131 690 (RICOH) 13-07-1985

## Beschreibung

Die Erfindung betrifft ein Videoaufzeichnungsgerät nach dem Oberbegriff des Anspruches 1.

Bei Aufzeichnungsgeräten der Unterhaltungselektronik, insbesondere bei Videoaufzeichnungsgeräten, ist es derzeit üblich, einen Programmwunschspeicher vorzusehen, in den der Benutzer des Gerätes die Kennungsdaten von Sendungen einspeichert, die er zur automatischen Aufzeichnung auf einen Aufzeichnungsträger des Gerätes ausgewählt hat. Ein derartiges Videoaufzeichnungsgerät ist beispielsweise aus der DE-A-34 39 398 bekannt. Die Kennungsdaten der vom Benutzer ausgewählten Sendungen, die in den Programmwunschspeicher des Aufzeichnungsgerätes eingegeben werden, enthalten unter anderem Senderkennungsdaten zur Abstimmung des Gerätes auf den Sender, der die ausgewählte Sendung ausstrahlt, die Sendung betreffende Uhrzeit- und Datumsdaten, sowie eine die Sendung kennzeichnende Sendungskennung. Nach den allgemein üblichen VPS-Normen ist die Sendungskennung die geplante Anfangszeit der Sendung. Diese Anfangszeit wird während der Übertragung der Sendung durch den Sender als Sendungskennung übertragen.

Die bekannten Aufzeichnungsgeräte enthalten eine Echtzeituhr, mit deren Zeitausgabe die in dem Programmwunschspeicher gespeicherten Anfangszeiten der vom Benutzer ausgewählten Sendungen verglichen werden. Bei einer Zeitkoinzidenz wird ein Tuner des Gerätes auf den Sender der Sendung abgestimmt, für deren Anfangszeit die Zeitkoinzidenz besteht. Außerdem wird eine Steueranordnung des Aufzeichnungsgerätes entweder sofort oder nach der Erkennung der zugehörigen Sendungskennung in den Aufzeichnungsbetriebszustand geschaltet und die empfangene Sendung auf den Aufzeichnungsträger aufgezeichnet.

Mit den genannten Einrichtungen eines derartigen Aufzeichnungsgerätes ist es möglich, von einem Benutzer des Gerätes ausgewählte Sendungen, deren Daten der Benutzer in das Aufzeichnungsgerät eingegeben hat, ohne Beisein des Benutzers auf einen in das Aufzeichnungsgerät eingelegten Aufzeichnungsträger aufzuzeichnen. Will der Benutzer des Gerätes jedoch die Aufzeichnungen nach der Aufnahme archivieren und zu diesem Zweck beispielsweise den Anfang der Aufzeichnung auf einer dazu vorgesehenen Stelle des Aufzeichnungsträgers oder dessen Kassette notieren oder in eine Archivierungsdatei eintragen, muß der Benutzer nachträglich in Wiedergabeläufen des Aufzeichnungsgerätes diese Positionsdaten umständlich ermitteln.

Der Erfindung liegt deshalb die Aufgabe zugrunde, ein Gerät nach dem Oberbegriff des Anspruches 1 so auszugestalten, daß ein Benutzer dieses Gerätes die zu einer Archivierung einer aufgezeichneten Sendung notwendigen Daten nicht erst durch nachträgliche Wiedergabeläufe des Gerätes ermitteln muß. Diese Aufgabe wird nach der Erfindung durch die im kennzeichnenden Teil des Anspruches 1 bzw. des Anspruches 3 angegebenen Merkmale in vorteilhafter Weise gelöst.

Vielfach werden die Daten einer im Programmwunschspeicher als Programmwunsch gespeicherten Sendung vom Aufzeichnungsgerät automatisch gelöscht, wenn die zugehörige Sendung vom Aufzeichnungsgerät aufgezeichnet ist. Der Benutzer des Gerätes hat danach überhaupt keinen Hinweis mehr auf vom Aufzeichnungsgerät aufgezeichnete Sendungen. Bei einem Aufzeichnungsgerät nach der Erfindung findet keine Löschung der die Sendung kennzeichnenden Kennungsdaten der aufgezeichneten Sendungen statt. Vielmehr werden diesen Kennungsdaten die Positionsdaten der Aufzeichnungsposition des Anfanges der aufgezeichneten Sendung auf den Aufzeichnungsträger hinzugefügt. Der Benutzer des Aufzeichnungsgerätes braucht lediglich durch eine einfache Bedienungshandlung am Aufzeichnungsgerät, gegebenenfalls über einen Fernbedienungsgeber des Gerätes, den Inhalt des Programmwunschspeichers auf ein Display oder einen Bildschirm abzurufen und erkennt dann ohne weiteres die bereits aufgezeichneten Sendungen. Er kann dann in aller Ruhe die auf der Anzeige zu den bereits aufgezeichneten Sendungen angegebenen Kennungsdaten einschließlich der Aufzeichnungsposition des Anfanges der Sendung notieren und danach erst löschen.

Die Unteransprüche kennzeichnen vorteilhafte Ausgestaltungen der Erfindung.

Die Erfindung wird nachfolgend anhand vorteilhafter Ausführungsbeispiele näher erläutert. In den zugehörigen Zeichnungen zeigen
- Fig. 1: ein Blockschaltbild eines Videoaufzeichnungsgerätes mit einem Positionsdatenspeicher,
- Fig. 2: ein Funktionsablaufdiagramm zu dem in Fig. 1 dargestellten Videoaufzeichnungsgerät,
- Fig. 3: ein Blockschaltbild eines Videoaufzeichnungsgerät mit Positionsdatenspeicherplätzen in einem Programmwunschspeicher,
- Fig. 4: ein Funktionsablaufdiagramm zu dem in Fig. 3 dargestellten Aufzeichnungsgerät.

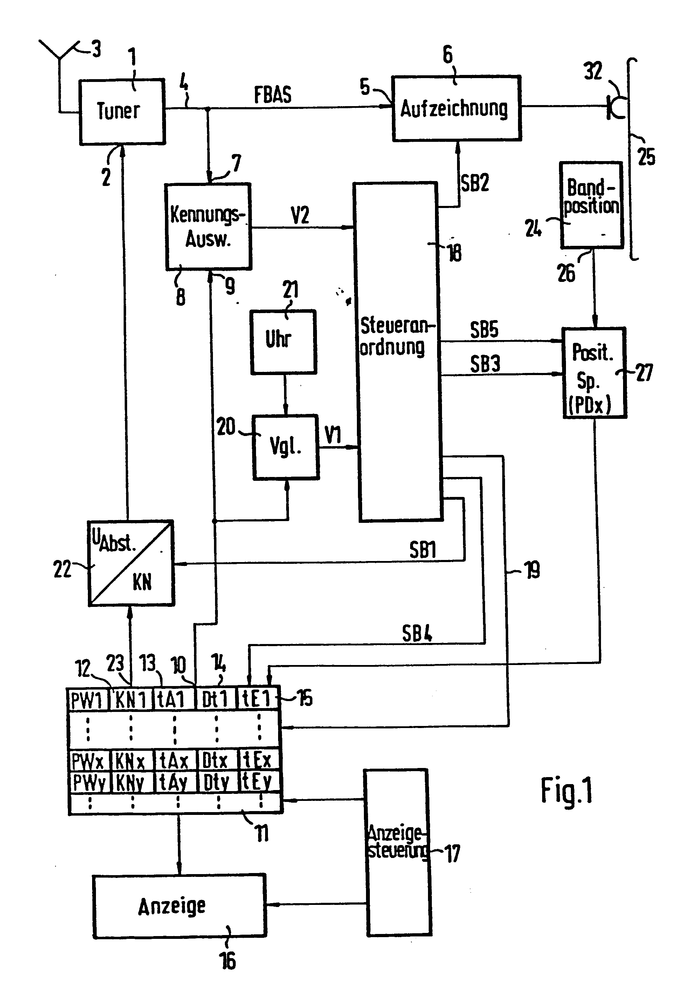

In Fig. 1 sind in einem Blockschaltbild die für die Aufzeichnung einer Sendung auf ein Videoband erforderlichen Funktionsblöcke eines Videoaufzeichnungsgerätes schematisch dargestellt. Zum Empfang von einem Fernsehsender abgestrahlter Videosendungen enthält das in Fig. 1 dargestellte Aufzeichnungsgerät einen Tuner 1, der durch eine Abstimmspannung U_{abst} an einem Abstimmeingang 2 auf einen bestimmten Sender abgestimmt werden kann und der die an einer Antenne 3 von diesem Sender empfangene Sendung in ein FBAS-Signal umwandelt. Dieses FBAS-Signal gelangt über eine Signalleitung 4 an den Signaleingang 5 einer Aufzeichnungsanordnung 6 des Aufzeichnungsgerätes und an einen ersten Signaleingang 7 eines Kennungsdatenauswertes 8. Der zweite Signaleingang 9 des Kennungsdatenauswerters 8 ist mit einem Zeidatenausgang 10 eines Programmwunschspeichers 11 des Aufzeichnungsgerätes verbunden.

In den Programmwunschspeicher 11 werden Kennungsdaten von Programmwünschen eingespeichert, die ein Benutzer des Aufzeichnungsgerätes aus Programmankündigungsmedien auswählt. Zur Einspeicherung eines Programmwunsches PW 1 muß der Benutzer des Aufzeichnungsgerätes bestimmte Kennungsdaten der ausgewählten Sendung, nämlich die Kanalnummer KN1, die Anfangszeit tA1 und das Datum Dt1 der ausgewählten Sendung und die Endezeit tE1 oder die Senderdauer der Sendung in die für diese Kennungsdaten vorgesehenen Speicherplätze 12 bis 15 des Programmwunsches PW1 einspeichern. Die Einspeicherung dieser Kennungsdaten in den Programmwunschspeicher, die nicht näher dargestellt ist, kann auf einer Anzeigeeinrichtung 16 des Aufzeichnungsgerätes kontrolliert werden, die an den Programmwunschspeicher 11 angeschlossen ist und von einer Anzeigesteueranordnung 17 gesteuert wird. An die Stelle der Anzeigeeinrichtung 16 des Videoaufzeichnungsgerätes kann auch der Bildschirm eines an das Videoaufzeichnungsgerät angeschlossenen Fernsehempfängers treten.

Die Abfrage des Programmwunschspeichers 11 wird im dargestellten Ausführungsbeispiel durch eine Steueranordnung 18 des Videoaufzeichnungsgerätes gesteuert. Zur Abfrage können die in den Programmwunschspeicher 11 eingespeicherten Programmwünsche PW1 bis PWy nach aufsteigenden Anfangszeiten tA1 bis tAy im Programmwunschspeicher 11 sortiert werden. In dem in Fig. 1 dargestellten Ausführungsbeispiel werden die in den Programmwunschspeicher 11 eingespeicherten Programmwünsche PW1 bis PWy über einen Steuerbus 19 der Steueranordnung 18 einzeln nacheinander abgefragt, so daß am Zeitdatenausgang 10 des Programmwunschspeichers 11 jeweils die Zeitdaten, nämlich die Anfangszeit tAx und das Datum Dtx des abgefragten Programmwunsches PWx erscheinen. Diese Zeitdaten werden in einer Vergleicheranordnung mit den Zeitdaten einer Echtzeituhr 21 verglichen.

Das in Fig. 1 dargestellte Videoaufzeichnungsgerät enthält außerdem eine Abstimmschaltungsordnung 22, die vom Programmwunschspeicher 11 an einem Kanaldatenausgang 23 ausgegebenen Kanaldaten KN in eine Abstimmspannung U_{abst} zur Abstimmung des Tuners 1 umwandelt. Ferner enthält das Videoaufzeichnungsgerät eine Positioneinrichtung 24 zur Ausgabe von Positionsdaten PD der augenblicklichen Bandposition eines Videobandes 25 oder der augenblicklichen Spurposition einer Aufzeichnungsspur eines Aufzeichnungsträgers des Videoaufzeichnungsgerätes. Die Positionseinrichtung tastet die Position des Videobandes 25 oder die Spurposition in nicht näher dargestellter Weise ab und bildet daraus die Positionsdaten. An den Ausgang 26 der Positionseinrichtung 24 ist ein von der Steueranordnung 18 gesteuerter Positionsdatenspeicher 27 angeschlossen.

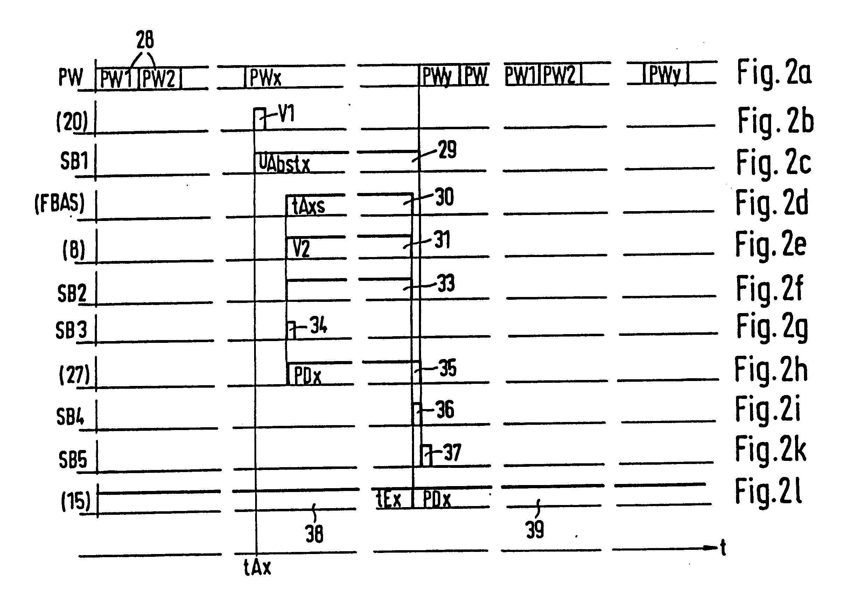

Der Funktionsablauf der Aufzeichnung der Sendung eines Programmwunsches PWx auf ein Videoband 25 ist in Fig. 2 in einem Ablaufdiagramm für das in Fig. 1 dargestellte Videoaufzeichnungsgerät dargestellt. Durch Steuerbefehle auf dem Steuerbus 19 werden im Programmwunschspeicher 11 nacheinander die Programmwünsche PW1 bis PWy abgefragt, was im Diagramm a) der Fig. 2 durch die Programmwunschblöcke 28 schematisch dargestellt ist. Stimmen während dieser Abfrage der Programmwünsche die Anfangszeitdaten tAx und Dtx mit den Zeitdaten der Echtzeituhr 21 überein, erzeugt die Vergleicheranordnung 20 ein Koinzidenzsignal V1, das zum Zeitpunkt tAx der Zeitachse t im Diagramm b) der Fig. 2 dargestellt ist und das in der Steueranordnung 18 einen Steuerbefehl SB1 auslöst und die Abfrage des Programmwunschspeichers 11 stoppt. Der Steuerbefehl SB1 schaltet die Abstimmschaltungsanordnung 23 wirksam, so daß die Abstimmschaltungsanordnung die vom Programmwunschspeicher 11 gelieferten Kanaldaten KNx für den abgestasteten Programmwunsch PWx in die entsprechende Abstimmspannung U_{abstx} umwandelt und damit den Tuner 1 auf den Sender abstimmt, der die Sendung des Programmwunsches PWx ausstrahlt (Diagramm c) .er Fig. 2). Der Sender, auf den der Tuner abgestimmt ist, kennzeichnet die von ihm abgestrahlten Sendungen durch eine senderseitige Sendungskennung, die während der gesamten Übertragung dieser Sendung gleichzeitig mit der Sendung ausgestrahlt wird. Im dargestellten Ausführungbeispiel ist diese senderseitige Sendungskennung die Sollanfangszeit der ausgestrahlten Sendung, für den Programmwunsch PWx die Sollanfangszeit tAxs, die im Diagramm d) der Fig. 2 durch den Block 30 dargestellt ist. Sobald der Kennungsdatenauswerter 8 diese Sollanfangszeit tAxs aus dem FBAS-Signal heraustrennt und eine Koinzidenz mit der vom Programmwunschspeicher 11 ausgegebenen Anfangszeit tAx feststellt, erzeugt der Kennungsdatenauswerter 8 während der Dauer dieser Koinzidenz ein Ausgangssignal V2 das im Diagramm e) der Fig.2 als Block 31 dargestellt ist. Dieses Koinzidenzsignal V2 schaltet die Steueranordnung 18 in einen Aufzeichnungsbetriebszustand, indem sie die Aufzeichnungsanordnung 6 über einen Steuerbefehl SB2 so wirksam schaltet, daß sie die empfangene Videosendung über Aufzeichnungsköpfe 32 normgerecht auf das Videoband 25 aufzeichnet. Außerdem erzeugt die Steueranordnung zu Beginn ihres Aufzeichnungsbetriebszustandes einen impulsförmigen Steuerbefehl SB3, der im Diagramm g) der Fig. 2 als Impuls 34 dargestellt ist und dem Positionsdatenspeicher 27 als Einschreibebefehl für die von der Positionseinrichtung 24 ausgegebenen Positionsdaten PDx zugeführt wird. Die in den Positionsdatenspeicher 27 eingespeicherten Postitionsdaten PDx für den Anfang der Aufzeichnung der Sendung des Programmwunsches PWx sind im Diagramm h) der Fig. 2 als Block 35 dargestellt.

Mit dem Ende der Übertragung der Sendung des Programmwunsches PWx wird auch die senderseitige Sendungskennung tAxs beendet, so daß auch das Koinsidenzsignal V2 ausbleibt. Die Rückflanke dieses Signales V2 erzeugt in der Steueranordnung einen impulsförmigen Steuerbefehl SB4 der im Diagramm i) als Impuls 36 dargestellt ist und als Einschreibsignal des abgefragten Programmwunsches PWx in dem Speicherplatz 15 dient, in den bisher die Endezeit tEx der Sendung dieses Speicherwunsches eingespeichert war. Anstelle dieser Endezeit werden nunmehr durch den Einspeicherbefehl SB4 die Bandpositionsdaten Pdx in den Speicherplatz 15 eingeschrieben, die in Positionsdatenspeicher 27 gespeichert sind. Ein darauf folgender impulsförmiger Steuerbefehl SB5, der im Diagramm k) der Fig. 2 als Impuls 37 dargestellt ist, löscht im dargestellten Ausführungsbeispiel den Positionsdatenspeicher 27. Im Diagramm l) der Fig. 2 ist durch die Blöcke 38 und 39 schematisch der Inhaltswechsel des Speicherplatzes 15 für die Endezeit tEx des abgefragten Programmwunsches PWx dargestellt. Mit dem Ende des Koinzidenzsignales V2 wird der Aufzeichnungsbetriebszustand der Steueranordnung 18 aufgelöst und mit Beginn des Steuerbefehles SB5 zu Löschung des Positionsdatenspeichers 27 die Abfrage des Programmwunschspeichers 11 über den Steuerbus 19 wieder in Gang gesetzt und die Tunerabstimmung abgeschaltet.

Die Kennungsdaten der Programmwünsche PWx, deren Sendung bereits auf das Videoband aufgezeichnet ist, und die zusätzlich eine Positionskennung in der Gestalt der Positionsdaten PDx der Band- oder Spurposition am Anfang der Aufzeichnung der Sendung enthalten, bleiben weiterhin im Programmwunschspeicher erhalten. Sie werden jedoch im Abfrageumlauf der Steueranordnung nicht mehr abgefragt. Sondern nur noch nach einem von einem Benutzer des Gerätes ausgelösten Abruf von der Anzeigeeinrichtung 16 angezeigt und in einer besonderen Ausbildung des dargestellten Videoaufzeichnungsgerätes durch einen vom Benutzer des Gerätes während der Anzeige der Kennungsdaten der aufgezeichneten Programmwünsche ausgelösten Löschvorganges gelöscht.

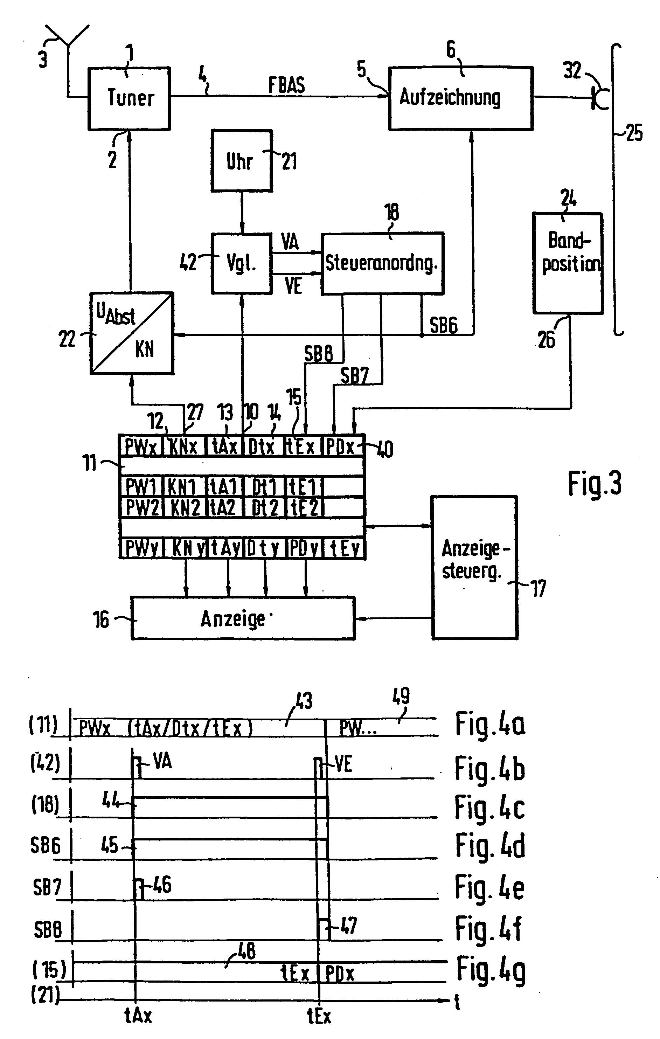

In Fig. 3 ist ein Blockschaltbild eines weiteren Ausführungsbeispieles eines Videoaufzeichnungsgerätes dargestellt. Dieses Videoaufzeichnungsgerät unterscheidet sich von dem in Fig. 1 dargestellten Videoaufzeichnungsgerät im wesentlichen darin, daß es keine Auswertung der senderseitig übertragenen Kennungsdaten einer Sendung enthält und daß anstelle eines Positionsdatenspeichers jeder Programmwunsch PW1 bis PWy im Programmwunschspeicher 11 des dargestellten Ausführungsbeispieles zusätzlich einen Speicherplatz 40 für die Einspeicherung der Positionsdaten des Anfanges der Aufzeichnung der Sendung des Programmwunsches enthält. In den Ausführungsbeispielen der in den Fig. 1 und 3 dargestellten Videoaufzeichnungsgeräten übereinstimmende Baugruppen, Leitungen, Ein- und Ausgänge sind mit den gleichen Bezugszeichen bezeichnet. Das in Fig. 3 dargestellte Ausführungsbeispiel eines Videoaufzeichnungsgerätes wird lediglich von der Echtzeituhr 21 gesteuert, während das in Fig. 1 dargestellte Ausführungsbeispiel eines Videoaufzeichnungsgerätes zusätzlich von den senderseitig übertragenen Sendungskennungsdaten gesteuert wird. Das in Fig. 3 dargestellte Videoaufzeichnungsgerät ist jedoch nicht auf die alleinige Steuerung durch eine Echtzeituhr 21 beschränkt. Es ist vielmehr in einer anderen Ausgestaltung dieses Ausführungsbeispieles möglich, auch dieses Videoaufzeichnungsgerät zusätzlich durch senderseitig übertragene Sendungskennungsdaten zu steuern.

Bei den Fig. 3 dargestellten Videoaufzeichnungsgerät sind die in den Programmwunschspeicher 11 eingespeicherten Programmwünsche nach aufsteigenden Anfangszeitdaten geordnet. Damit ist der in der Abfragezeile angeordnete Programmwunsch PWx derjenige Programmwunsch, dessen Anfangszeitdaten tAx und Dtx die zeitlich nächstliegenden Zeitdaten sind. Dieser Wartezustand für die Zeitdaten des Programmwunsches PWx ist im Diagramm a) des in Fig. 4 dargestellten Funktionsablaufdiagrammes für das in Fig. 3 dargestellte Videoaufzeichnungsgerät durch den Block 43 dargestellt. Die Anfangszeitdaten tAx und Dtx dieses Programmwunsches werden in einer Vergleicheranordnung 42 mit den Zeitdaten einer Echtzeituhr 21 verglichen. Im Falle einer Koinzidenz mit der Anfangszeit tAx erzeugt die Vergleicheranordnung 42 ein Koinzidenzsignal VA, das im Diagramm b) der Fig. 4 dargestellt ist und die Steueranordnung 18 des Videoaufzeichnungsgerätes in den Aufzeichnungsbetriebszustands schaltet. Während des Aufzeichnungsbetriebszustandes, der im Diagramm c) der Fig. 4 durch einen Block 44 dargestellt ist, erzeugt die Steueranordnung 18 einen Steuerbefehl SB6, der im Diagramm d) der Fig. 4 mit einem Block 45 dargestellt ist und der sowohl die Aufzeichnungsanordnung 6 als auch die Abstimmungschaltungsanordnung 22 des Videoaufzeichnungsgerätes wirksam schaltet. Dadurch wird der Tuner 1 auf den Kanal KNx des Senders des Programmwunsches PWx abgestimmt und die empfangene Sendung des Programmwunsches PWx über die Aufzeichnungsanordnung 6 mittels der Aufzeichnungsköpfe 32 auf ein Videoband 25 aufgezeichnet.

Mit beginn des Steuerbefehles SB6, der von der Steueranordnung 18 während deren Aufzeichnungsbetriebszustand 44 erzeugt wird, erzeugt die Steueranordnung 18 zusätzlich einen impulsförmigen Steuerbefehl SB7, der im Diagramm e) der Fig. 4 durch einen Impuls 46 dargestellt ist und als Einlesebefehl zum Einlesen der Positionsdaten des Videobandes 25 zu Beginn der Aufzeichnung der Sendung des Programmwunsches PWx in dessen Speicherplatz 40 für die Positionsdaten PDx dient. Die Positionsdaten PD werden von einer Positionseinrichtung 24 ausgegeben, die in nicht näher dargestellter Weise die jeweils augenblickliche Position des Videobandes 25 an den Aufzeichnungköpfen 32 ermittelt und die zugehörigen Positionsdaten an einem Datenausgang 26 ausgibt.

Sobald die Vergleicheranordnung 42 eine Koinzidenz zwischen der Sendezeit tEx der Sendung des Programmwunsches PWx mit den Zeitdaten der Echtzeituhr 21 feststellt, erzeugt sie ein zweites Koinzidenzsignal VE, das im Diagramm b) der Fig. 4 dargestellt ist und den Aufzeichnungsbetriebszustand der Steueranordnung 18 auflöst. Mit diesem Koinzidenzsignal erzeugt die Steuerandordnung 18 einen impulsförmigen Steuerbefehl SB8, der als Impuls 47 im Diagramm f) in Fig. 4 dargestellt ist und der im dargestellten Ausführungsbeispiel die Zuordnung der Speicherplätze für die Endezeit tEx und die Positionsdaten PDx des soeben aufgezeichneten Programmwunsches PWx vertauscht, wie dies im Diagramm g) der Fig. 4 durch den Balken 48 dargestellt ist. Gleichzeitig werden durch diesen Steuerbefehl SB8 die Daten des soeben aufgezeichneten Programmwunsches PWx in eine andere, am Ende der Zeilenreihe liegende Speicherzeile des Programmwunschspeichers 11 umgespeichert, so daß in die Abfragezeile des Programmwunschspeichers 11 die Kennungsdaten des Programmwunsches PW... mit der nächstliegenden Anfangszeit tA... gelangen, wie im Diagramm a) der Fig. 4 durch den Übergang von Block 43 in einen Block 49 schematisch dargestellt ist.

In der Darstellung des Programmwunschspeichers 11 in Fig. 3 ist ein bereits aufgezeichneter Programmwunsch PWy schematisch eingezeichnet, dessen Speicherplätze für die Endezeit tEy und die Positionsdaten PDy bereits vertauscht sind. Aus der Darstellung der Fig. 3 ist durch die Pfeilführung zu einer Anzeigeeinrichtung 16 ersichtlich, daß bei der Anzeige des Inhaltes des Programmwunschspeichers 11 bei bereits aufgezeichneten Programmwünschen, deren Kennungsdaten über die Aufzeichnung hinaus im Programmwunschspeicher 11 gespeichert werden, anstelle der Endezeit tEy der aufgezeichneten Sendung die Positionsdaten PDy des Anfanges der Aufzeichnung der Sendung des Programmwunsches PWy angezeigt werden.

## Patentansprüche

1. Videoaufzeichnungsgerät
- mit einem Programmwunschspeicher, in den die Kennungsdaten (Kanalnummer, Anfangszeit, Endezeit, Sendedatum) von als Programmwunsch ausgewählten Sendungen eingespeichert werden,
- mit einer Steueranordnung, die aufgrund der im Programmwunschspeicher gespeicherten Kennungsdaten zum Aufzeichnen einer den Kennungsdaten zugeordneten Sendungen auf ein Aufzeichnungsband oder einen Aufzeichnungsträger in einen Aufzeichnungsbetriebszustand schaltbar ist,
- und mit einer Anzeigeeinrichtung zur wenigstens zeitweisen Anzeige in den Programmwunschspeicher eingespeicherter Kennungsdaten von ausgewählten Sendungen,
- ferner mit einer Positionseinrichtung zur Ermittlung und Ausgabe der Bandposition des Aufzeichnungsbandes oder der Spurposition auf einer Spur des Aufzeichnungsträgers,
**dadurch gekennzeichnet,** daß das Videoaufzeichnungsgerät einen Positionsspeicher (27) aufweist,
- daß die Spur- oder Bandposition (PDx), die die Positionseinrichtung (24) beim Umschalten der Steueranordnung (18) in den Aufzeichnungsbetriebszustand (44) ausgibt, in den Positionsspeicher (27) eingespeichert wird,
- daß beim Abschalten des Aufzeichnungsbetriebszustandes der Steueranordnung die im Positionsspeicher gespeicherte Spur- oder Bandposition als Positionskennung (PDx) in einen Speicherplatz (15) der im Programmwunschspeicher (11) gespeicherten Kennungsdaten (KNx, tAx, Dtx tEx) der während des Aufzeichnungsbetriebszustandes der Steueranordnung aufgezeichneten Sendung eingespeichert wird und
- daß der Inhalt dieses Speicherplatzes (15) von der Anzeigeeinrichtung (16) bei der Anzeige der im Programmwunschspeicher verbleibenden Kennungsdaten der aufgezeichneten Sendung angezeigt wird.

2. Videoaufzeichnungsgerät nach Anspruch 1, dadurch gekennzeichnet, daß der Speicherplatz (15) für die Endezeit (tEx) der im Programmwunschspeicher (11) gespeicherten Kennungsdaten (KNx...) für eine ausgewählte Sendung (PWx) nach dem Aufzeichnen dieser Sendung der Speicherplatz für die Positionskennung (PDx) dieser Sendung ist und die Positionskennung anstelle der Endezeit in diesen Speicherplatz eingespeichert wird.

3. Videoaufzeichnungsgerät
- mit einem Programmwunschspeicher, in den die Kennungsdaten (Kanalnummer, Anfangszeit, Endezeit, Sendedatum) von als Programmwunsch ausgewählten Sendungen eingespeichert werden,
- mit einer Steueranordnung, die aufgrund der im Programmwunschspeicher gespeicherten Kennungsdaten zum Aufzeichnen einer den Kennungsdaten zugeordneten Sendungen auf ein Aufzeichnungsband oder einen Aufzeichnungsträger in einen Aufzeichnungsbetriebszustand schaltbar ist,
- und mit einer Anzeigeeinrichtung zur wenigstens zeitweisen Anzeige in den Programmwunschspeicher eingespeicherter Kennungsdaten von ausgewählten Sendungen,
- ferner mit einer Positionseinrichtung zur Ermittlung und Ausgabe der Bandposition des Aufzeichnungsbandes oder der Spurposition auf einer Spur des Aufzeichnungsträgers,
**dadurch gekennzeichnet,**
- daß im Programmwunschspeicher (11) unter den Speicherplätzen (12 bis 15) für die Kennungsdaten (KNx...) einer ausgewählten Sendung (PWx) zusätzlich ein Speicherplatz (40) einer Positionskennung (PDx) vorgesehen ist,
- daß die Spur oder Bandposition (PDx), die die Positionseinrichtung (24) beim Umschalten der Steueranordnung (18) in den Aufzeichnungsbetriebszustand (44) ausgibt, in den Positionskennungsspeicherplatz (40) derjenigen ausgewählten Sendung (PWx) eingespeichert wird, aufgrund deren Kennungsdaten (tAx, Dtx) die Steueranordnung in den Aufzeichnungsbetriebszustand umgeschaltet wurde,
- und daß der Inhalt dieses Positionskennungsspeicherplatzes (40) von der Anzeigeeinrichtung (16) bei der Anzeige der im Programmwunschspeicher verbleibenden Kennungsdaten der aufgezeichneten Sendung angezeigt wird.

4. Videoaufzeichnungsgerät nach Anspruch 3, dadurch gekennzeichnet, daß die im Speicherplatz (40) für die Positionskennung gespeicherten Positionsdaten (PDx) nach dem Aufzeichnen der Sendung (PWx), der diese Positionsdaten zugeordnet sind, anstelle der Endezeit (tEx) in den Speicherplatz (15) für die Endezeit der soeben aufgezeichneten Sendung (PWx) eingespeichert wird.

## Claims

1. Video recording device
- with a desired program memory in which the identification data (channel number, starting time, ending time, transmission date) of broadcasts selected as desired programs are stored;
- with a control arrangement that can be switched into recording mode on the basis of the identification data stored in the desired program memory for recording, on a recording tape or a recording medium, broadcasts associated with the identification data;
- and with a display apparatus to display, at least at times, identification data for selected broadcasts stored in the desired program memory;
- and further with a position apparatus to determine and output the tape position of the recording tape or the track position on a track of the recording medium;
**characterized in that**
- the video recording device has a position memory (27);
- the track or tape position (PDx) that the position apparatus (24) outputs when the control arrangement (18) is switched into the recording mode (44) is stored in the position memory (27);
- when the recording mode of the control arrangement is switched off, the track or tape position (PDx) stored in the position memory is stored as a position identifier (PDx) in a memory location (15) of the identification data (KNx, tAx, Dtx, tEx) of the broadcast recorded while the control arrangement was in the recording mode; and
- the contents of said memory location (15) are displayed by the display apparatus (16) when the identification data of the recorded broadcast that remain in the desired program memory are displayed.

2. Video recording device according to Claim 1, characterized in that the memory location (15) for the ending time (tEx) of the identification data (KNx...) for a selected broadcast (PWx) stored in the desired program memory (11) is, after said broadcast has been recorded, the memory location for the position identifier (PDx) of said broadcast, and the position identifier is stored in said memory location in place of the ending time.

3. Video recording device
- with a desired program memory in which the identification data (channel number, starting time, ending time, transmission date) of broadcasts selected as desired programs are stored;
- with a control arrangement that can be switched into recording mode on the basis of the identification data stored in the desired program memory for recording, on a recording tape or a recording medium, broadcasts associated with the identification data;
- and with a display apparatus to display, at least at times, identification data for selected broadcasts stored in the desired program memory;
- and further with a position apparatus to determine and output the tape position of the recording tape or the track position on a track of the recording medium;
**characterized in that**
- a memory location (40) for a position identifier (PDx) is additionally provided in the desired program memory (11) among the memory locations (12 to 15) for the identification data (KNx ...) of a selected broadcast (PWx);
- the track or tape position (PDx) that the position apparatus (24) outputs when the control arrangement (18) is switched into the recording mode (44) is stored in the position identification memory location (40) of that selected broadcast (PWx) on the basis of whose identification data (tAx, Dtx) the control arrangement was switched into the recording mode; and that
- the contents of said position identification memory location (40) are displayed by the display apparatus (16) when the identification data of the recorded broadcast that remain in the desired program memory are displayed.

4. Video recording device according to Claim 3, characterized in that the position data (PDx) stored in the memory location (40) for position identification are stored, after recording of the broadcast (PWx) with which said position data are associated, in the memory location (15) for the ending time of the broadcast (PWx) that was just recorded, in place of the ending time (tEx).

## Revendications

1. Enregistreur vidéo
- avec mémoire de programmes sélectionnés, dans laquelle sont mémorisées les caractéristiques d'identification (numéro du canal, heure du début, heure de la fin, date d'émission) d'émissions désirées sélectionnées,
- avec une disposition de commande pouvant être commutée, en vertu des caractéristiques d'identification mémorisées, dans la mémoire de programmes sélectionnés pour enregistrer une des émissions affectées aux caractéristiques d'identification sur une bande d'enregistrement ou un support d'enregistrement, sur un état de service d'enregistrement,
- et avec un dispositif d'affichage pour l'affichage, au moins de temps en temps, des caractéristiques d'identification d'émissions sélectionnées mémorisées dans la mémoire de programmes sélectionnés,
- en outre avec un dispositif de positionnement pour la détermination et l'émission de la position de la banque d'enregistrement ou de la position de la piste sur une piste du support d'enregistrement,
**caractérisé en ce que**
- l'enregistreur vidéo présente une mémoire de positions (27),
- la position de la piste ou de la bande (PDx), que le dispositif de positionnement (24) émet lors de la commutation de la disposition de commande (18) dans l'état de service d'enregistrement (44), est mémorisée dans la mémoire de positions (27),
- à la déconnexion de l'état de service d'enregistrement de la position de commande, la position de la piste ou de la bande mémorisée dans la mémoire de positions est mémorisée comme repère de position (PDx) à un enregistrement (15) des caractéristiques d'identification (KNx, tAx, Dtx tEx), mémorisées dans la mémoire de programmes sélectionnés (11), de l'émission enregistrée pendant l'état de service d'enregistrement de la disposition de commande et
- que le contenu de cet emplacement de mémoire (15) est affiché par le dispositif d'affichage (16) lors de l'affichage des caractéristiques d'identification, restant dans la mémoire de programme sélectionnés, de l'émission enregistrée.

2. Enregistreur vidéo selon la revendication 1, caractérisé en ce que l'emplacement de mémoire (15) pour l'heure de la fin (tEx) des caractéristiques d'identification (KNx...) mémorisées dans la mémoire de programmes sélectionnés (11) pour une émission sélectionnée (PWx) est, après l'enregistrement de cette émission, l'emplacement de mémoire pour l'identification de la position (PDx) de cette émission et que l'identification de la position est mémorisée dans cet emplacement de la mémoire à la place de l'heure de la fin.

3. Enregistreur vidéo
- avec une mémoire de programme sélectionnés, dans laquelle sont mémorisées les caractéristiques d'identification (numéro du canal, heure du début, heure de la fin, date d'émission) d'émissions désirées sélectionnées,
- avec une disposition de commande pouvant être commutée, en vertu des caractéristiques d'identification mémorisées dans la mémoire de programmes sélectionnés, pour enregistrer une des émissions affectées aux caractéristiques d'identification sur une bande d'enregistrement ou un support d'enregistrement, sur un état de service d'enregistrement,
- et avec un dispositif d'affichage pour l'affichage, au moins de temps en temps, des caractéristiques d'identification d'émissions sélectionnées dans la mémoire de programmes sélectionnés,
- en outre avec un dispositif de positionnement pour la détermination et l'émission de la position de la bande d'enregistrement ou de la position de la piste sur une piste du support d'enregistrement,
**caractérisé en ce que**
- dans la mémoire de programmes sélectionnés (11) est prévu, parmi les emplacements de mémoire (12 à 15) pour les caractéristiques d'identification (KNx...) d'une émission sélectionnée (PWx), en plus un emplacement de mémoire (40) d'une identification de position (PDx),
- la position de piste ou de bande (PDx) que le dispositif de positionnement (24) émet lors de la communication de la disposition de commande (18) sur l'état de service d'enregistrement (44) est mémorisée dans l'emplacement de mémorisation d'identification de l'émission sélectionnée (PWx), en vertu des caractéristiques d'identification (tAx, Dtx) de laquelle la disposition de commande a été commutée sur l'état de service d'enregistrement,
- et que le contenu de cet emplacement de mémoire d'identification de position (40) est affiché par le dispositif d'affichage (16) lors de l'affichage des caractéristiques d'identification de l'émission enregistrée restant dans la mémoire de programmes sélectionnés.

4. Enregistreur vidéo selon la revendication 3, caractérisé en ce que les caractéristiques de position (PDx) mémorisées sur l'emplacement de mémoire (40) pour l'identification de la position, après l'enregistrement de l'émission (PWx) affectée à ces caractéristiques de position, est mémorisé à la place de l'heure de la fin (tEx) sur l'emplacement de mémoire (15) pour l'heure de la fin de l'émission (PWx) justement enregistrée.
